# EUROPÄISCHE PATENTSCHRIFT

(11) **EP 3 577 363 B1**
(45) Veröffentlichungstag und Bekanntmachung des Hinweises auf die Patenterteilung: **15.03.2023**
(21) Anmeldenummer: 18702054.0
(22) Anmeldetag: 16.01.2018
(51) Int. Cl.: F16D 55/00, F16D 55/22, F16D 63/00, F16D 65/18, H02K 7/102

(54) **ELEKTROMAGNETISCH BETÄTIGBARE BREMSANORDNUNG ZUM ABBREMSEN EINER WELLE UND ELEKTROMOTOR MIT EINER SOLCHEN BREMSANORDNUNG**
ELECTROMECHANICALLY ACTUATED SHAFT BRAKE AND AN ELECTRIC MOTOR WITH SUCH A BRAKE
FREINAGE ELECTROMECHANIQUE POUR UN AXE, ET ELECTROMOTEUR AVEC UN TEL FREINAGE

(30) Priorität: 31.01.2017 DE 102017000845
(43) Veröffentlichungstag der Anmeldung: 11.12.2019
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE); RIESER GEB. PFANN, Jochen, 76149 Karlsruhe (DE); TESCH, Sven, 76698 Ubstadt-Weiher (DE); ESSERT, Steffen, 76646 Bruchsal (DE)
(86) Internationale Anmeldenummer: PCT/EP2018/025009
(87) Internationale Veröffentlichungsnummer: WO 2018/141480

(56) Entgegenhaltungen:
- EP-B1- 0 957 565
- DE-A1-102013 001 899
- DE-A1-102013 016 999
- DE-A1-102013 020 524
- DE-A1-102015 001 647
- DE-B3-102014 018 485

## Beschreibung

Die Erfindung betrifft eine elektromagnetisch betätigbare Bremsanordnung zum Abbremsen einer Welle und Elektromotor mit einer solchen Bremsanordnung.

Aus der EP 0 957 565 B1 ist als nächstliegender Stand der Technik eine vorkomplettierte Bremse bekannt.

Aus der DE 10 2013 016999 A1 ist eine Bremsanordnung bekannt.

Aus der DE 10 2013 020 524 A1 ist eine elektromagnetisch betätigbare Bremsanordnung bekannt.

Aus der DE 10 2013 001 899A1 ist eine Bremsanordnung mit Dämpfungsblech bekannt.

Aus der DE 10 2014 018 485 B3 ist eine elektromagnetisch betätigbare Bremsvorrichtung bekannt.

Aus der DE 10 2015 001 647 A1 ist eine Bremsanordnung bekannt.

Der Erfindung liegt daher die Aufgabe zugrunde, eine elektromagnetisch betätigbare Bremsanordnung zum Abbremsen einer Welle und Elektromotor mit einer solchen Bremsanordnung weiterzubilden.

Erfindungsgemäß wird die Aufgabe bei der elektromagnetisch betätigbare Bremsanordnung zum Abbremsen einer Welle nach den in Anspruch 1 und Elektromotor mit einer solchen Bremsanordnung nach den in Anspruch 11 angegebenen Merkmalen gelöst.

Wichtige Merkmale der Erfindung bei der elektromagnetisch betätigbaren Bremsanordnung zum Abbremsen einer Welle sind, dass sie
- einen Magnetkörper,
- eine in dem Magnetkörper aufgenommene Spule,
- ein Federelement,
- eine mit dem Magnetkörper drehfest verbundene, aber axial bewegbar angeordnete Ankerscheibe,
- einen mit der Welle drehfest verbindbare, aber axial bewegbar angeordneten Bremsbelagträger und
- ein Reibblech,

aufweist,
wobei die Ankerscheibe axial-zwischen der Spule und dem Bremsbelagträger angeordnet ist,
wobei der Bremsbelagträger axial zwischen dem Reibblech und dem Bremsbelagträger angeordnet ist,
wobei das Reibblech nach radial außen hervorragende Laschenbereiche aufweist, die in eine Ringnut des Magnetkörpers eingreifen,
insbesondere wobei die Ringachse der Ringnut axial ausgerichtet ist.

Von Vorteil ist dabei, dass die Bremsanordnung vorkomplettiert ausbildbar ist und das Reibblech in einfacher Weise verbindbar ist. Denn das Reibblech muss nur in axialer Richtung eingeschoben werden. Für die Laschenbereiche ist jeweils eine entsprechend Ausnehmung im Magnetkörper vorhanden. Durch nachfolgendes Drehen sind die Laschenbereiche in die Ringnut einführbar, welche in die Ausnehmung mündet. Somit ist ein Bajonettverschluss realisiert. Außerdem ist die Bremse vorkomplettiert. Denn das Federelement drückt die Ankerscheibe vom Magnetkörper weg und somit auch den Bremsbelagträger, welcher auf das Reibblech drückt. Da das Reibblech aber mit dem Magnetkörper verbunden ist, ist die Bremsanordnung vorkomplettiert, also als bauliche Einheit transportfähig.

Allerdings wäre das Reibblech zu dünn, um die beim Bremsen entstehende Wärme abzuführen. Daher ist das Bremsen nur nach dem Einbau der Bremsanordnung in den Motor und somit Anliegen des Reibblechs am Lagerflansch ausführbar.

Vorteiligerweise umgibt der Magnetkörper die Bauteile der Bremsanordnung gehäusebildend und ist mit einem Lagerflansch eines Motors verbindbar, so dass der Innenraumberiech der Bremsanordnung zur Umgebung hin abgedichtet ist und die Reibscheibe zur Wärmeabfuhr an dem Lagerflansch anliegt. Allerdings ist dann der der Abstand zwischen Magnetkörper und dem Lagerflansch unveränderlich, da der Magnetkörper am Lagerflansch ausgerichtet und zentriert ist. Somit ist bei Verschleiß des Bremsbelagträgers ein Nachstellen der Bremse nicht möglich. Daher ist der Bremsbelagträger mit einer hohen Standzeit und möglichst großflächigen Anlage an der Ankerscheibe und an der Reibscheibe ausgeführt.

Bei einer vorteilhaften Ausgestaltung ist das Reibblech mittels Bajonettverschluss mit dem Magnetkörper verbunden,
wobei im vom Reibblech zusammen mit dem Magnetkörper umgebenen Raumbereich die Ankerscheibe, der Bremsbelagträger und die Spule angeordnet sind,
insbesondere so, dass die Bremsanordnung vorkomplettiert ist. Von Vorteil ist dabei, dass eine einfache Verbindungstechnik und somit schnelle und einfache Herstellung ausführbar ist.

Bei einer vorteilhaften Ausgestaltung ist das Federelement im Magnetkörper abgestützt und auf die Ankerscheibe drückt,
insbesondere so dass bei Bestromung der Spule die von der Spule erzeugte magnetisches Anziehungskraft die von dem Federelement erzeugte Federkraft überwindet, so dass die Ankerscheibe zum Magnetkörper hingezogen wird. Von Vorteil ist dabei, dass bei Stromausfall die Bremse einfällt, also Reibungskraft vorhanden ist.

Bei einer vorteilhaften Ausgestaltung ist zwischen Ankerscheibe und Magnetkörper ein Dämpfungsblech angeordnet,
insbesondere welches Erhebungen zum Abdämpfen eines jeweiligen Aufschlags der Ankerscheibe auf dem Magnetkörper aufweist. Von Vorteil ist dabei, dass die Schallemission der Bremse verringert ist.

Bei einer vorteilhaften Ausgestaltung ist am Magnetkörper ein Zentriermittel, wie eine Zentrierbohrung oder ein Zentrierbund, ausgebildet,
insbesondere wobei an der vom Reibblech abgewandten Seite des Magnetkörpers ein Wellendichtring zur Abdichtung des Magnetkörpers zur Welle hinaufgenommen ist. Von Vorteil ist dabei, dass der Magnetkörper relativ zum Lagerflansch ausgerichtet und zentriert ist und somit auch zur Welle des Motors. Somit ist der im Magnetkörper aufgenommene Wellendichtring ebenfalls korrekt ausgerichtet zur Welle.

Bei einer vorteilhaften Ausgestaltung ist eine Stiftschraube mit der Ankerscheibe verbunden, insbesondere schraubverbunden, wobei die Stiftschraube axial gleitend in dem Magnetkörper gelagert ist, insbesondere mittels eines Gleitlagers, insbesondere Buchse, insbesondere Kunststoffbuchse, wobei das Gleitlager in einer Ausnehmung, insbesondere Bohrung, des Magnetkörpers aufgenommen ist,
insbesondere wobei an dem von der Ankerscheibe abgewandten Endbereich der Stiftschraube eine Mutter mit der Stiftschraube verbunden ist. Von Vorteil ist dabei, dass die Stiftschrauben in den jeweiligen Buchsen zentriert sind und somit die Abdichtung ebenfalls symmetrisch zur Stiftschraube ausgerichtet ist. Die Dichtung ist somit als Gummitülle oder ähnlich ausführbar. Auf diese Weise wird sie bei Betrieb, also bei der Ausführung des Hubs der Ankerscheibe nur elastisch ausgelenkt und nicht verschoben. Zum Magnetkörper hin und zur Stiftschraube hin ist die Haftreibung also genügend groß, so dass die beim Auslenken erzeugte elastische Kraft betragsmäßig kleiner ist als die Haftreibung.

Bei einer vorteilhaften Ausgestaltung ist an der vom Reibblech abgewandten Seite des Magnetkörpers eine als Abstützung oder Drehpunkt ausgebildete Erhöhung ausgeformt, welche als Drehlager für einen Lüfthebel fungiert,
wobei ein am Magnetkörper abgestütztes Rückstellfederelement auf den Lüfthebel drückt,

insbesondere wobei der Lüfthebel den axialen Hub der Ankerscheibe begrenzt, insbesondere indem er eine Mutter axial begrenzt oder schiebt, welche mit einer Stiftschraube verbunden ist, welche mit der Ankerscheibe verbunden ist. Von Vorteil ist dabei, dass eine Handlüftung in einfacher Weise realisierbar ist. Hierzu ist durch bloße Formgebung am Magnetkörper ein Auflager für den Lüfthebel realisiert. Der Lüfthebel weist eine entsprechende Vertiefung auf, so dass ein Drehlager für den Lüfthebel bildbar ist. Das Rückstellfederelement drückt des Lüfthebel in diejenige Stellung, in welcher die Ankerscheibe ihre beim Lüften oder Einfallen bewirkte axiale Hin- beziehungsweise Herbewegung unbeschränkt ausführen kann. Wird jedoch der Lüfthebel von Hand betätigt und dabei entsprechend geschwenkt, begrenzt der Lüfthebel die Ankerscheibe und zwar derart, dass die Bremse gelüftet ist, also die Ankerscheibe vom Lüfthebel zum Magnetkörper hingedrückt ist. Somit ist mit der Handlüftung die auf die Ankerscheibe erzeugte Kraft bei Bestromung der Spule ersetzbar.

Bei einer vorteilhaften Ausgestaltung weist das Rückstellfederelement einen mit dem Magnetkörper verbundenen Klemmringbereich und einen Federarmbereich auf,
wobei der Federarmbereich auf den Lüfthebel drückt,
insbesondere wobei bei Betätigung des Lüfthebels, insbesondere also Auslenken des Lüfthebels, der Federarmbereich elastisch ausgelenkt wird. Von Vorteil ist dabei, dass mittels des Klemmringbereichs das Rückstellfederelement am Magnetkörper festgelegt ist und mittels des Federarmbereichs eine elastische Kraft erzeugbar ist, welche auf den Lüfthebel rückstellend wirkt. Somit ist durch ein einziges als Stanz-Biegeteil ausführbares Bauteil eine rückstellende Wirkung erzeugbar. Der Klemmringbereich klemmt sich dabei nach Art eines Sicherungsrings in einer Ringnut des Magnetkörpers fest.

Bei einer vorteilhaften Ausgestaltung ist der Klemmringbereich in einer am Magnetkörper ausgebildeten Ringnut eingeschnappt, insbesondere der Klemmringbereich einen ringförmigen Bereich aufweist, wobei ein Schlitz den ringförmigen Bereich in zwei Teile trennt, wobei die beiden Teile in der Ringnut elastisch vorgespannt gehalten sind, insbesondere gegen den Boden der Ringnut drücken. Von Vorteil ist dabei, dass der Klemmringbereich in einem von Sicherungsringen bekannten Verfahren befestigt wird in der Ringnut des Magnetkörpers. Im entspannten Zustand ist der zwischen den beiden Teilen vorhandene lichte Durchmesser kleiner als der Ring-Durchmesser der Ringnut. Bei der Montage werden die beiden Teile auseinander gedrückt, so dass der lichte Durchmesser ansteigt und der Klemmringbereich auf den die Ringnut aufweisenden hervorragenden Bereich des Magnetkörpers aufschiebbar ist. Nach Freigeben des Klemmringbereichs klammert sich dieser in der Ringnut fest und somit ist der Klemmringbereich eingeschnappt in die Ringnut und daher formschlüssig gehalten.

Bei einer vorteilhaften Ausgestaltung weist die Stiftschraube einen ersten Gewindeabschnitt und einen zweiten Gewindeabschnitt auf, wobei axial zwischen dem ersten und dem zweiten Gewindeabschnitt ein zylindrischer Abschnitt an der Stiftschraube ausgebildet ist. Von Vorteil ist dabei, dass der erste Gewindeabschnitt zur Schraubverbindung mit der Ankerscheibe und der zweite Gewindeabschnitt zur Schraubverbindung mit der Mutter geeignet ausgeführt ist. An der Mutter greift der Lüfthebel an oder ein mit diesem verbundenen Gestänge. Der zylindrische Bereich ist zur Gleitlagerung geeignet.

Wichtige Merkmale bei dem Elektromotor mit Bremsanordnung sind, dass der Elektromotor einen Lagerflansch aufweist, in welche ein erstes Lager aufgenommen ist,
wobei der Elektromotor ein Flanschteil aufweist, in welchem ein zweites Lager aufgenommen ist,
wobei die Welle mittels des ersten und des zweiten Lagers des Motors gelagert ist.

Von Vorteil ist dabei, dass mittels der Bremsanordnung ein Abbremsen der Welle bewirkbar ist und die Welle im Motor gelagert ist. Trotzdem ist der im Magnetkörper aufgenommene Wellendichtring zur Welle ausgerichtet, weil der Magnetkörper mittels Zentriermittel zum Motor hin, insbesondere zum Lagerflansch hin, ausgerichtet und zentriert ist.

Bei einer vorteilhaften Ausgestaltung ist der Lagerflansch mit dem Magnetkörper verbunden und weist ein zum Zentriermittel des Magnetkörpers entsprechendes Zentriermittel, insbesondere Zentrierbund oder Zentrierbohrung, auf. Von Vorteil ist dabei, dass der Magnetkörper zum Lagerflansch und somit auch zur Welle ausgerichtet ist. Denn die Lageraufnahmen der Lager im Lagerflansch beziehungsweise im Flanschteil sind ausgerichtet und zentriert.

Bei einer vorteilhaften Ausgestaltung sind die Stiftschrauben auf größerem Radialabstand zur Wellenachse angeordnet als der Belagträger,
und/oder dass der von den Stiftschrauben überdeckte Radialabstandsbereich radial außerhalb des von dem Belagträger überdeckten Radialabstandsbereich angeordnet ist und/oder zumindest überlappt mit dem von einem an der Reibscheibe ausgebildeten Laschenbereich überdeckten Radialabstandsbereich. Von Vorteil ist dabei, dass der Magnetkörper derartige Erhebungen aufweist, dass ein Freiraum, also eine Ausnehmung, derart ausbildbar ist, dass dieser Freiraum bei der Montage der Reibscheibe zum axialen Einfädeln des Laschenbereichs verwendbar ist, die im Magnetkörper, insbesondere also an dessen Innenwand, eingebrachte Ringnut in diesen Freiraum mündet und somit bei der Montage der Laschenbereich in die Ringnut hineindrehbar ist und danach durch diesen Freiraum eine Stiftschraube durchführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

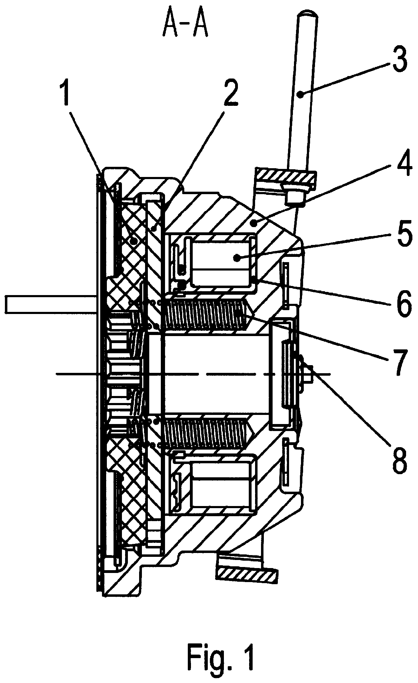

In der Figur 1 ist ein Querschnitt durch eine erfindungsgemäße Bremsanordnung eines Bremsmotors gezeigt.

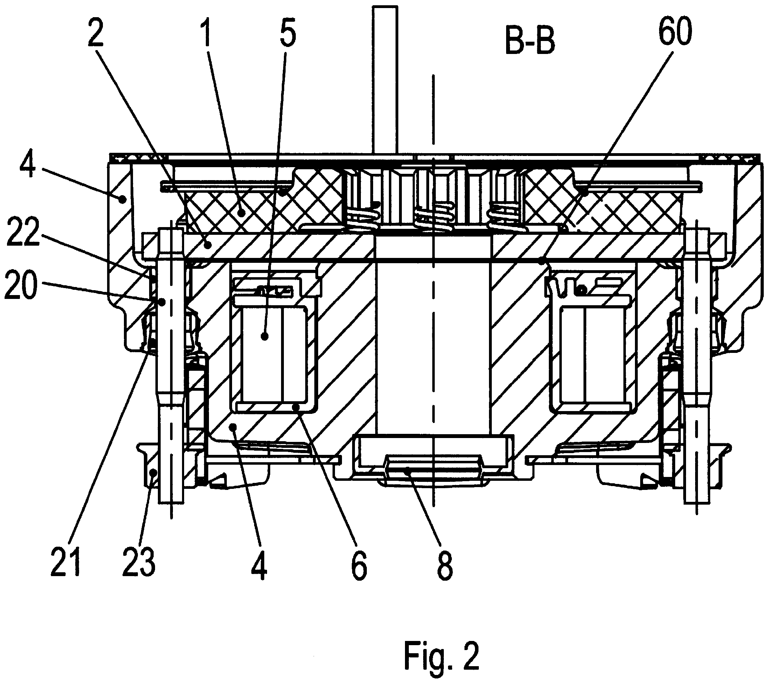

In der Figur 2 ist ein zugehöriger Längsschnitt gezeigt.

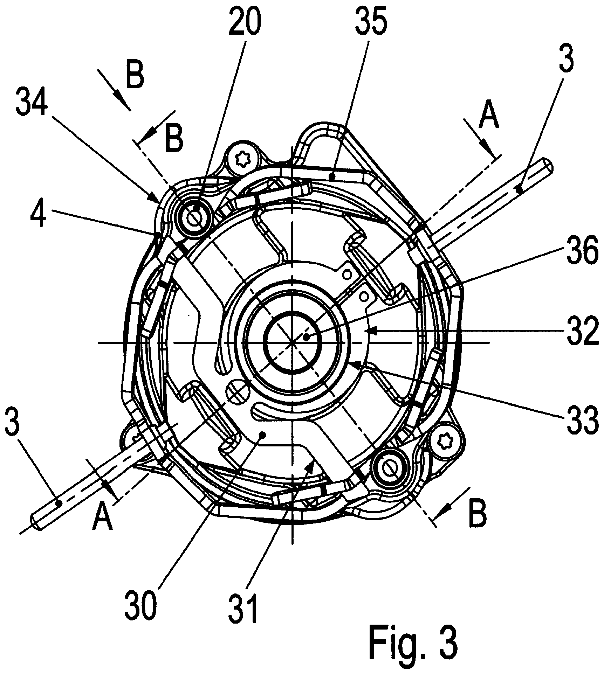

In der Figur 3 ist eine zugehörige Draufsicht gezeigt.
In der Figur 4 ist eine zugehörige Seitenansicht gezeigt, wobei ein am Magnetkörper 4 abgestütztes Rückstellfederelement 30 gezeigt ist.

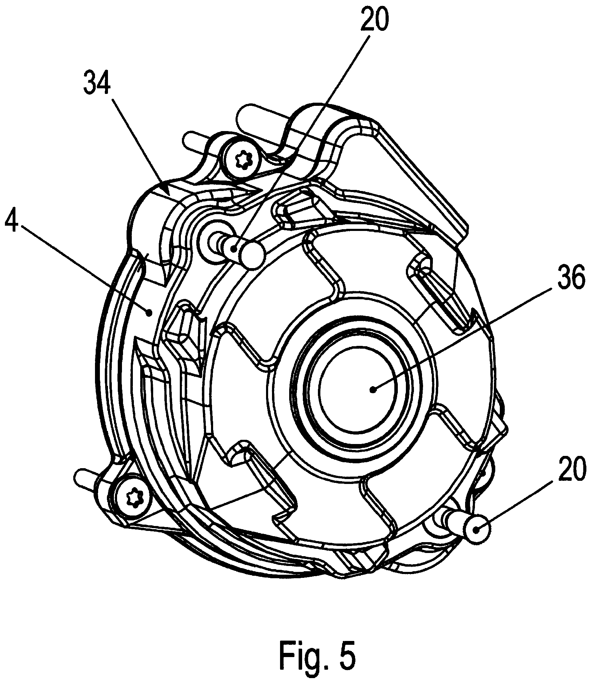

In der Figur 5 ist eine zugehörige Schrägansicht gezeigt.

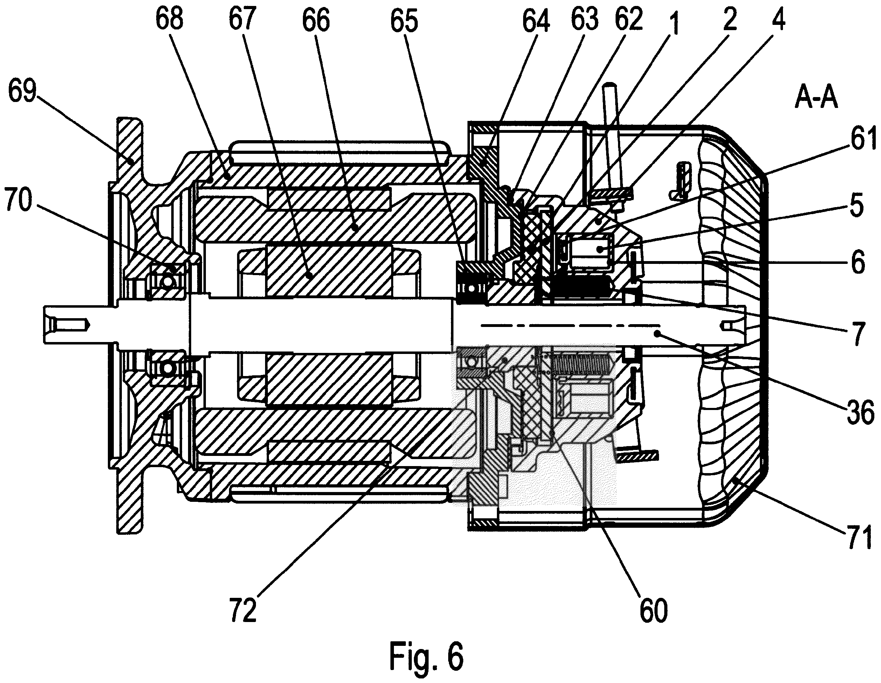

In der Figur 6 ist ein Querschnitt durch den Bremsmotor gezeigt.

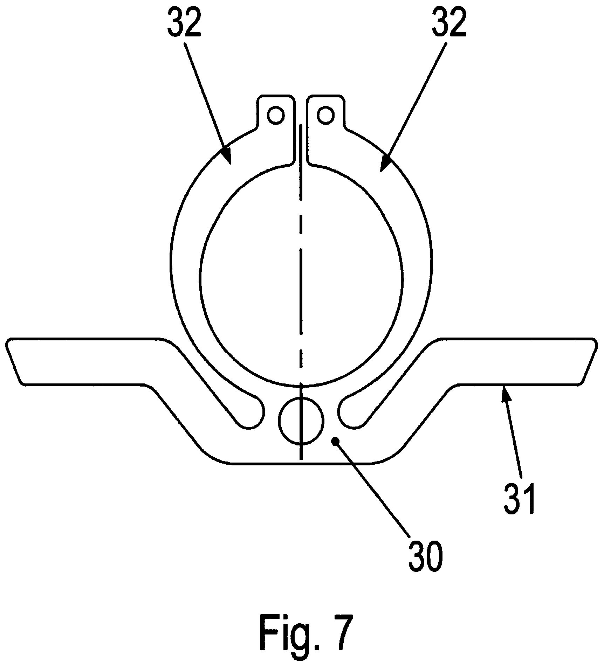

In der Figur 7 ist das Rückstellfederelement 30 mit seinen Federarmberiechen 31 und seinem Klemmbereich 32 in Draufsicht dargestellt.

Wie in den Figuren gezeigt, weist die Bremsanordnung einen topfförmigen Magnetkörper 4 auf, wobei an dessen Topfboden eine als Ringspule ausgeführte Spule 5 in einer Ringnut angeordnet ist.

Die Spule 5 ist in einem aus Kunststoff gefertigten Spulenträger 6 aufgenommen, welcher in der Ringnut aufgenommen ist.

In eine Ankerscheibe 2 sind Stiftschrauben 20 formschlüssig verbunden, insbesondere eingeschraubt. Die Stiftschrauben 20 sind axial gleitgelagert in einem als Buchse ausgeführten Gleitlager 22.

Das Gleitlager 22 ist in dem Magnetkörper 4 aufgenommen. Auf die jeweilige Stiftschraube 20 ist jeweils ein Dichtelement 21 aufgeschoben, welches zwischen Stiftschraube 20 und Magnetkörper 4 abdichtet. Bei der linearen Hin- oder Herbewegung der Ankerscheibe 2 samt Stiftschraube 20 wird das Dichtelement 21 nur elastisch verformt, nicht aber verschoben.

Zwischen Magnetkörper 4 und Ankerscheibe 2 ist ein Dämpfungsblech 60 angeordnet.

Das Dämpfungsblech 60 weist Erhebungen auf, so dass bei der Bestromung der Spule 5 zwar die Ankerscheibe 2 angezogen wird, jedoch der Aufschlag mittels des Dämpfungsblechs 60 elastisch gedämpft wird.

Die abzubremsende Welle 36 ist mittels eines ersten Lagers 70 in einem Flanschteil 69 und mittels eines weiteren Lagers 65 in einem Lagerflansch 64 gelagert. Das Flanschteil 69 ist mit einem Statorgehäuse 68 verbunden, mit dem auch der Lagerflansch 64 verbunden ist. Das Statorgehäuse 69 ist axial zwischen dem Lagerflansch 64 und dem Flanschteil 69 angeordnet.

Mit der Welle ist ein Mitnehmer drehfest verbunden, dessen Außenverzahnung im Eingriff ist mit der Innenverzahnung eines Bremsbelagträgers 1. Der Bremsbelagträger 1 ist somit drehfest mit der Welle 36 verbunden aber axial bewegbar.

Der Magnetkörper 4 ist mit dem Lagerflansch 64 verbunden, wobei eine Flachdichtung 63 Dichtigkeit herstellt.

Der Magnetkörper 4 weist an seinem dem Lagerflansch 64 zugewandten Endbereich an der Innenseite seiner Wandung eine umlaufende Ringnut auf, welche durch Freiräume unterbrochen sind, welche durch radial gerichtete Erhebungen ausgebildet sind.

Ein Reibblech 62 welches nach radial außen hervorragende Laschenbereiche aufweist, ist somit in axialer Richtung mit diesen Laschenbereichen in die Freiräume einfädelbar und dann in Umfangsrichtung drehbar, so dass die Laschenbereiche in der Ringnut geführt sind.

An den Laschenbereichen sind jeweils noch weiter radial hervorstehende Anschlagsbereiche ausgeformt, welche die Drehbewegung in Umfangsrichtung stoppen, also als Anschlag in Umfangsrichtung wirksam sind.

Somit ist das Reibblech 62 nach Art eines Bajonettverschlusses mit dem Magnetkörper 4 verbindbar.

Bei Bestromung der Spule 5 wird die aus ferromagnetischem Werkstoff gefertigte Ankerscheibe 2 zur Spule 5 hingezogen. Im Magnetkörper 4 abgestützte Federelemente 7 drücken die Ankerscheibe 2 von dem Magnetkörper 4 weg, sobald die Bestromung der Spule 5 beendet ist.

Somit wird die Ankerscheibe 2 bei Bestromung der Spule 5 derart mit Strom beaufschlagt, dass die Ankerscheibe 2 entgegen der von den Federelementen 7 erzeugten Federkraft zum Magnetkörper 4 hingezogen. Bei Nichtbestromung der Spule 5 fällt dann die Bremse wieder ein. Dabei wird die Ankerscheibe 2 auf den Bremsbelagträger 1 gedrückt, so dass dieser auf das Reibblech 62 gedrückt wird. Da das Reibblech 62 an dem Lagerflansch 64 anliegt, wird die beim Abbremsen des Bremsbelagträgers 1 am Reibblech 62 entstehende Wärme zum Lagerflansch 64 hin abgeleitet.

Der vom Magnetkörper 4 überdeckte axiale Bereich umfasst auch den von dem Bremsbelagträger 1 und der Ankerscheibe 2 überdeckten axialen Bereich. Somit ist der Magnetkörper 4 auch gehäusebildend für die Bremsanordnung, insbesondere für die Ankerscheibe 2 und den Bremsbelagträger 1 wirksam.

An der vom Lagerflansch 64 abgewandten Seite des Magnetkörpers 4 ist ein Wellendichtring 8 im Magnetkörper 4 aufgenommen, welcher zur Welle 36 hin abdichtet.

Der Magnetkörper 4 weist eine zum Lagerflansch 64 hin gewandte Zentrierbohrung auf, die an einem an dem Lagerflansch 64 ausgeformten Zentrierbund zentrierbar ist. Somit ist der Wellendichtring 8 zur Welle 36 hin zentriert.

Spulenträger 6 und Spule 5 sind mittels Vergussmasse 61 in der ringförmigen Nut des Magnetkörpers 4 fixiert.

Mittels des Reibblechs 62 ist die Bremsanordnung vorkomplettiert ausbildbar. Somit ist schon vor der Montage der Bremsanordnung ein einfaches Einlagern und/oder Transportieren der Bremse ermöglicht.

Die Stiftschrauben 20 sind jeweils in einem der Freiräume angeordnet. Somit ermöglichen die radialen Erhebungen 34 die Ausformung der Freiräume, welche nicht nur als Einfädelbereich für die Laschenbereiche des Reibblechs 62 fungieren, sondern auch zur Aufnahme der ankerscheibe mit den Stiftschrauben 20, insbesondere mit den beiden Stiftschrauben 20.

An ihrem dem Lagerflansch 64 zugewandten Endbereich ist auf den Stiftschrauben 20 eine Mutter 23 aufgeschraubt. Somit ist eine Handlüftung ermöglicht. Hierzu ist ein Handhebel 3 vorgesehen, welcher mit einem Lüfthebel 35 verbunden ist. Dieser greift entweder direkt oder mittels eines Gestänges an der Mutter 23 ein, so dass mittels Drehen des Handhebels 3 ein Über das Eingreifen an der Mutter 23 ein Verschieben der Ankerscheibe 2 ermöglicht ist, also ein durch Handbetätigung bewirktes Lüften der Bremse. Dies ist insbesondere im unbestromten Fall nützlich.

Der Lüfthebel 35 wird von einem Rückstellfederelement 30 zurückgestellt.

Der Lüfthebel 35 liegt auf einer als Abstützung oder Drehpunkt 40 am Magnetkörper 4 ausgeformten Erhebung auf, so dass er schwenkbar ist.

Das Rückstellfederelement 30 weist einen Federarmbereich 31 und einen Klemmringbereich 32 auf, wobei das Rückstellfederelement 30 mit dem Klemmringbereich 32 wie bei einem Sicherungsring in eine am Magnetkörper 4 ausgebildete Ringnut eingeklipst ist. Somit ist das Rückstellfederelement 30 kraftschlüssig in die Ringnut eingeführt und somit formschlüssig gehalten, da die Ringnut ein Herauswandern des Rückstellfederelements 30 verhindert.

Auf diese Weise ist das Rückstellfederelement 30 mittels der Ringnut am Magnetkörper 4 abgestützt und drückt mittels ihres Federarms 31 auf den Lüfthebel 35, so dass dieser derart am Magnetkörper 4 anliegt, dass die Bremse in ihrer Funktion ungestört bleibt.

Bei Betätigung der Handlüftung wird der Lüfthebel 35 entgegen der vom dann elastisch ausgelenkten Federarm 31 ausgelenkt und schiebt die Mutter 23 und somit die Stiftschraube 20 von der Spule weg. Somit wird die Ankerscheibe 2 ebenfalls von der Spule 5 entfernt und die Bremse damit gelüftet.

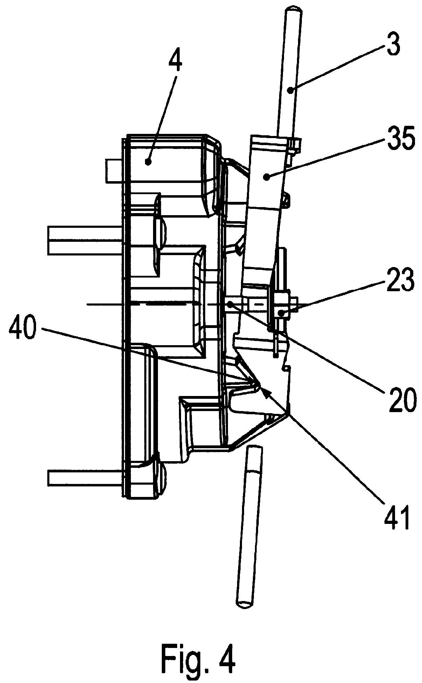

In der Figur 4 ist eine Seitenansicht gezeigt, in welcher das Drehlager des Lüfthebels 35 der Handlüftung gezeigt ist und die durch den Lüfthebel 35 bewirkte Begrenzung der auf einer Stiftschraube 20 schraubverbundenen Mutter 23, wobei ein am Magnetkörper 4 abgestütztes Rückstellfederelement 30 auf den Lüfthebel 35 drückt.

Bei einer anderen Ausführungsform wäre statt des direkten Begrenzens der Mutter 23 mittels des Lüfthebels 35 auch ein Gestänge am Lüfthebel befestigbar, welches dann die Mutter 23 begrenzt. Dabei wären dann allerdings mehr Teile notwendig als bei der in den Figuren, insbesondere in Figur 4, gezeigten Ausführung.

### Bezugszeichenliste

1 Bremsbelagträger
2 Ankerscheibe
3 Handhebel
4 Magnetkörper
5 Spule
6 Spulenträger
7 Federelement
8 Wellendichtring
20 Stiftschraube
21 Dichtelement
22 Gleitlager, insbesondere Buchse
23 Mutter
30 Rückstellfederelement
31 Federarmbereich des Rückstellfederelements 30
32 Klemmringbereich des Rückstellfederelements 30
33 Ringnut zur Aufnahme des Klemmringbereichs 32
34 Erhebung
35 Lüfthebel
36 Welle
40 Drehpunkt, insbesondere Abstützung
41 Vertiefung
60 Dämpfungsblech
61 Vergussmasse
62 Reibblech
63 Flachdichtung
64 Lagerflansch
65 Lager
66 Stator
67 Rotor
68 Statorgehäuse
69 Flanschteil
70 Lager
71 Lüfterhaube
72 Mitnehmer

## Patentansprüche

1. Elektromagnetisch betätigbare Bremsanordnung zum Abbremsen einer Welle,
aufweisend
- einen Magnetkörper (4),
- eine in dem Magnetkörper (4) aufgenommene Spule (5),
- ein Federelement (7),
- eine mit dem Magnetkörper (4) drehfest verbundene, aber axial bewegbar angeordnete Ankerscheibe (2),
- einen mit der Welle drehfest verbindbare, aber axial bewegbar angeordneten Bremsbelagträger (1) und
- ein Reibblech,
wobei die Ankerscheibe (2) axial zwischen der Spule (5) und dem Bremsbelagträger (1) angeordnet ist,
wobei der Bremsbelagträger (1) axial-zwischen dem Reibblech und dem Bremsbelagträger (1) angeordnet ist,
**wobei** das Reibblech nach radial außen hervorragende Laschenbereiche aufweist, die in eine Ringnut des Magnetkörpers (4) eingreifen,
insbesondere wobei die Ringachse der Ringnut axial ausgerichtet ist,
das Reibblech mittels Bajonettverschluss mit dem Magnetkörper (4) verbunden ist,
wobei im vom Reibblech zusammen mit dem Magnetkörper (4) umgebenen Raumbereich die Ankerscheibe (2), der Bremsbelagträger (1) und die Spule (5) angeordnet sind,
**wobei zwischen Ankerscheibe (2) und Magnetkörper (4) ein Dämpfungsblech (6ß) angeordnet ist, welches Erhebungen zum Abdämpfen eines jeweiligen Aufschlags der Ankerscheibe (2) auf dem Magnetkörper (4) aufweist,**
**dadurch gekennzeichnet, dass**
**an der vom Reibblech abgewandten Seite des Magnetkörpers (4) eine als Abstützung oder Drehpunkt (40) ausgebildete Erhöhung ausgeformt ist, welche als Drehlager für einen Lüfthebel fungiert,**
**wobei ein am Magnetkörper (4) abgestütztes Rückstellfederelement (30) auf den Lüfthebel drückt,**
**wobei der Lüfthebel den axialen Hub der Ankerscheibe (2) begrenzt.**

2. Bremsanordnung nach Anspruch 1,
**dadurch gekennzeichnet, dass**
**die Bremsanordnung vorkomplettiert ist.**

3. Bremsanordnung nach mindestens einem der vorangegangenen Ansprüche, **dadurch gekennzeichnet, dass**
das Federelement (7) im Magnetkörper (4) abgestützt ist und auf die Ankerscheibe (2) drückt,
insbesondere so dass bei Bestromung der Spule (5) die von der Spule (5) erzeugte magnetisches Anziehungskraft die von dem Federelement (7) erzeugte Federkraft überwindet, so dass die Ankerscheibe (2) zum Magnetkörper (4) hingezogen wird.

4. Bremsanordnung nach mindestens einem der vorangegangenen Ansprüche, **dadurch gekennzeichnet, dass**
am Magnetkörper (4) ein Zentriermittel, wie eine Zentrierbohrung oder ein Zentrierbund, ausgebildet ist,
insbesondere wobei an der vom Reibblech abgewandten Seite des Magnetkörpers (4) ein Wellendichtring (8) zur Abdichtung des Magnetkörpers (4) zur Welle hinaufgenommen ist.

5. Bremsanordnung nach mindestens einem der vorangegangenen Ansprüche,
**dadurch gekennzeichnet, dass**
eine Stiftschraube (20) mit der Ankerscheibe (2) verbunden ist, insbesondere schraubverbunden ist,
wobei die Stiftschraube (20) axial gleitend und/oder mittels eines Gleitlagers, insbesondere Buchse, insbesondere Kunststoffbuchse, in dem Magnetkörper (4) gelagert ist,
wobei das Gleitlager in einer Ausnehmung, insbesondere Bohrung, des Magnetkörpers (4) aufgenommen ist,
insbesondere wobei an dem von der Ankerscheibe (2) abgewandten Endbereich der Stiftschraube (20) eine Mutter mit der Stiftschraube (20) verbunden ist.

6. Bremsanordnung nach mindestens einem der vorangegangenen Ansprüche,
**dadurch gekennzeichnet, dass**
**der Lüfthebel den axialen Hub der Ankerscheibe (2) begrenzt,** indem er eine Mutter axial begrenzt oder schiebt, welche mit einer Stiftschraube (20) verbunden ist, welche mit der Ankerscheibe (2) verbunden ist.

7. Bremsanordnung nach mindestens einem der vorangegangenen Ansprüche,
**dadurch gekennzeichnet, dass**
das Rückstellfederelement (30) einen mit dem Magnetkörper (4) verbundenen Klemmringbereich und einen Federarmbereich aufweist,
wobei der Federarmbereich auf den Lüfthebel drückt,
insbesondere wobei bei Betätigung des Lüfthebels, insbesondere also Auslenken des Lüfthebels, der Federarmbereich elastisch ausgelenkt wird.

8. Bremsanordnung nach mindestens einem der vorangegangenen Ansprüche,
**dadurch gekennzeichnet, dass**
der Klemmringbereich in einer am Magnetkörper (4) ausgebildeten Ringnut eingeschnappt ist, insbesondere der Klemmringbereich einen ringförmigen Bereich aufweist, wobei ein Schlitz den ringförmigen Bereich in zwei Teile trennt, wobei die beiden Teile in der Ringnut elastisch vorgespannt gehalten sind, insbesondere gegen den Boden der Ringnut drücken.

9. Bremsanordnung nach mindestens einem der vorangegangenen Ansprüche,
**dadurch gekennzeichnet, dass**
die Stiftschraube (20) einen ersten Gewindeabschnitt und einen zweiten Gewindeabschnitt aufweist, wobei axial zwischen dem ersten und dem zweiten Gewindeabschnitt ein zylindrischer Abschnitt an der Stiftschraube (20) ausgebildet ist.

10. Bremsanordnung nach mindestens einem der vorangegangenen Ansprüche, **dadurch gekennzeichnet, dass**
die Stiftschrauben (20) auf größerem Radialabstand zur Wellenachse angeordnet sind als der Belagträger,
und/oder dass der von den Stiftschrauben (20) überdeckte Radialabstandsbereich radial außerhalb des von dem Belagträger überdeckten Radialabstandsbereich angeordnet ist und/oder zumindest überlappt mit dem von einem an der Reibscheibe ausgebildeten Laschenbereich überdeckten Radialabstandsbereich.

11. Elektromotor mit Bremsanordnung nach mindestens einem der vorangegangenen Ansprüche,
**dadurch gekennzeichnet, dass**
der Elektromotor einen Lagerflansch aufweist, in welche ein erstes Lager aufgenommen ist,
wobei der Elektromotor ein Flanschteil aufweist, in welchem ein zweites Lager aufgenommen ist,
wobei die Welle mittels des ersten und des zweiten Lagers des Motors gelagert ist.

12. **Elektromotor nach dem vorhergehenden Anspruch,**
**dadurch gekennzeichnet, dass**
der Lagerflansch mit dem Magnetkörper (4) verbunden ist und ein zum Zentriermittel des Magnetkörpers (4) entsprechendes Zentriermittel, insbesondere Zentrierbund oder Zentrierbohrung, aufweist,
und/oder dass
das Reibblech am Lagerflansch anliegt, insbesondere zur Abfuhr der Reibwärme der Bremsanordnung an den Lagerflansch.

## Claims

1. An electromagnetically actuatable brake arrangement for braking a shaft,
having
- a magnetic body (4),
- a coil (5) received in the magnetic body (4),
- a spring element (7),
- an armature plate (2) connected to the magnetic body (4) in a rotationally-fixed manner, yet arranged in an axially movable manner,
- a brake lining carrier (1) connectable to the shaft in a rotationally-fixed manner yet arranged in an axially movable manner and
- a friction plate,
wherein the armature plate (2) is arranged axially between the coil (5) and the brake lining carrier (1),
wherein the brake lining carrier (1) is arranged between the friction plate and the brake lining carrier (1),
wherein the friction plate has radially outwards projecting lug regions which engage a ring groove of the magnetic body (4),
in particular wherein the ring axis of the ring groove is oriented axially,
the friction plate is connected to the magnetic body (4) by means of a bayonet fastening,
wherein the armature plate (2), the brake lining carrier (1) and the coil (5) are arranged in the spatial region surrounded by the friction plate together with the magnetic body (4),
wherein a damping plate (60) is arranged between armature plate (2) and magnetic body (4), which damping plate has protrusions to dampen a respective impact of the armature plate (2) on the magnetic body (4),
**characterised in that**
at that side of the magnetic body (4) remote from the friction plate there is formed an elevation, in the form of a support or pivot (40), which acts as a pivot bearing for a release lever,
wherein a return spring element (30), supported on the magnetic body (4), presses onto the release lever,
wherein the release lever limits the axial stroke of the armature plate (2).

2. A brake arrangement according to claim 1,
**characterised in that**
the brake arrangement is pre-assembled.

3. A brake arrangement according to at least one of the preceding claims,
**characterised in that**
the spring element (7) is supported in the magnetic body (4) and presses onto the armature plate (2),
in particular so that when current is supplied to the coil (5), the magnetic force of attraction produced by the coil (5) overcomes the spring force produced by the spring element (7), so that the armature plate (2) is drawn towards the magnetic body (4).

4. A brake arrangement according to at least one of the preceding claims,
**characterised in that**
a centring means, such as a centring bore or a centring collar, is formed at the magnetic body (4),
in particular wherein at that side of the magnetic body (4) remote from the friction plate, a shaft seal (8) for sealing the magnetic body (4) is taken up to the shaft.

5. A brake arrangement according to at least one of the preceding claims,
**characterised in that**
a stud (20) is connected to the armature plate (2), in particular screw-connected,
wherein the stud (20) is mounted in the magnetic body (4) in an axially-sliding manner and/or by means of a plain bearing, in particular bushing, in particular plastics bushing,
wherein the plain bearing is received in a cut-out, in particular bore, of the magnetic body (4),
in particular wherein a nut is connected to the stud (20) at the end region, remote from the armature plate (2), of the stud (20).

6. A brake arrangement according to at least one of the preceding claims,
**characterised in that**
the release lever limits the axial stroke of the armature plate (2) **in that** it axially limits or presses a nut connected to a stud (20) connected to the armature plate (2).

7. A brake arrangement according to at least one of the preceding claims,
**characterised in that**
the return spring element (30) has a clamping ring region, connected to the magnetic body (4), and a spring arm region,
wherein the spring arm region presses onto the release lever,
in particular wherein upon actuation of the release lever, in particular therefore deflection of the release lever, the spring arm region is elastically deflected.

8. A brake arrangement according to at least one of the preceding claims,
**characterised in that**
the clamping ring region is snapped into a ring groove formed at the magnetic body (4), in particular the clamping ring region has an annular region, wherein a slit separates the annular region into two parts, wherein the two parts are held in the ring groove in an elastically pretensioned manner, in particular press against the bottom of the ring groove.

9. A brake arrangement according to at least one of the preceding claims,
**characterised in that**
the stud (20) has a first threaded portion and a second threaded portion, wherein axially between the first and the second threaded portion there is formed a cylindrical portion at the stud (20).

10. A brake arrangement according to at least one of the preceding claims,
**characterised in that**
the studs (20) are arranged at a greater radial spacing than the lining carrier from the shaft axis, and/or **in that** the radial spacing region covered by the studs (20) is arranged radially outside of the radial spacing region covered by the lining carrier and/or at least overlaps with the radial spacing region covered by a lug region formed at the friction disc.

11. An electric motor with brake arrangement according to at least one of the preceding claims, **characterised in that**
the electric motor has a bearing flange in which a first bearing is received,
wherein the electric motor has a flange part in which a second bearing is received,
wherein the shaft is mounted by means of the first and the second bearing of the motor.

12. An electric motor according to the preceding claim,
**characterised in that**
the bearing flange is connected to the magnetic body (4) and has a centring means, in particular centring collar or centring bore, corresponding to the centring means of the magnetic body (4), and/or **in that**
the friction plate rests against the bearing flange, in particular to dissipate the frictional heat of the brake arrangement at the bearing flange.

## Revendications

1. Agencement de freinage à actionnement électromagnétique pour freiner un arbre, présentant :
- un corps magnétique (4),
- une bobine (5) reçue dans le corps magnétique (4),
- un élément formant ressort (7),
- un disque d'induit (2) solidaire en rotation du corps magnétique (4), mais mobile axialement,
- un support de garniture de frein (1) solidaire en rotation de l'arbre, mais mobile axialement, et
- une tôle de friction,
dans lequel le disque d'induit (2) est disposé axialement entre la bobine (5) et le support de garniture de frein (1),
dans lequel le support de garniture de frein (1) est disposé entre la tôle de friction et le support de garniture de frein (1),
dans lequel la tôle de friction présente des zones formant pattes faisant saillie radialement vers l'extérieur, qui s'engagent dans une rainure annulaire du corps magnétique (4),
en particulier dans lequel l'axe annulaire de la rainure annulaire est orienté axialement,
la tôle de friction est reliée au corps magnétique (4) au moyen d'un verrouillage à baïonnette,
dans lequel le disque d'induit (2), le support de garniture de frein (1) et la bobine (5) sont disposés dans la zone d'espace entourée par la tôle de friction ainsi que par le corps magnétique (4),
dans lequel une tôle d'amortissement (60) est disposée entre le disque d'induit (2) et le corps magnétique (4), laquelle présente des surélévations pour amortir un impact respectif du disque d'induit (2) sur le corps magnétique (4),
**caractérisé en ce que**
sur le côté du corps magnétique (4) opposé à la tôle de friction est formée une surélévation réalisée sous la forme d'un élément d'appui ou d'un centre de rotation (40), qui sert de palier de rotation pour un levier de desserrage,
dans lequel un élément formant ressort de rappel (30) supporté sur le corps magnétique (4) appuie sur le levier de desserrage,
dans lequel le levier de desserrage limite la course axiale du disque d'induit (2).

2. Agencement de freinage selon la revendication 1,
**caractérisé en ce que**
l'agencement de freinage est préassemblé.

3. Agencement de freinage selon au moins l'une des revendications précédentes,
**caractérisé en ce que**
l'élément formant ressort (7) est supporté dans le corps magnétique (4) et appuie sur le disque d'induit (2),
en particulier de telle sorte que, lorsque la bobine (5) est alimentée en courant, la force d'attraction magnétique générée par la bobine (5) surmonte la force élastique générée par l'élément formant ressort (7), de sorte que le disque d'induit (2) est attiré vers le corps magnétique (4).

4. Agencement de freinage selon au moins l'une des revendications précédentes,
**caractérisé en ce**
**qu'**un moyen de centrage, tel qu'un alésage de centrage ou une collerette de centrage, est formé sur le corps magnétique (4),
en particulier dans lequel une bague d'étanchéité d'arbre (8) est montée sur le côté du corps magnétique (4) opposé à la tôle de friction pour assurer l'étanchéité du corps magnétique (4) par rapport à l'arbre.

5. Agencement de freinage selon au moins l'une des revendications précédentes,
**caractérisé en ce**
**qu'**un goujon fileté (20) est relié au disque d'induit (2), en particulier par vissage,
dans lequel le goujon fileté (20) est monté dans le corps magnétique (4) de manière à pouvoir coulisser axialement et/ou au moyen d'un palier lisse, en particulier une douille, en particulier une douille en matière plastique,
dans lequel le palier lisse est reçu dans un évidement, en particulier un alésage, du corps magnétique (4),
en particulier dans lequel un écrou est relié au goujon fileté (20) au niveau de la zone d'extrémité du goujon fileté (20) opposée au disque d'induit (2).

6. Agencement de freinage selon au moins l'une des revendications précédentes,
**caractérisé en ce que**
le levier de desserrage limite la course axiale du disque d'induit (2) en limitant ou en poussant axialement un écrou qui est relié à un goujon fileté (20) qui est relié au disque d'induit (2).

7. Agencement de freinage selon au moins l'une des revendications précédentes,
**caractérisé en ce que**
l'élément formant ressort de rappel (30) présente une zone formant bague de serrage reliée au corps magnétique (4) et une zone formant bras élastique,
dans lequel la zone formant bras élastique appuie sur le levier de desserrage,
en particulier dans lequel la zone formant bras élastique est déviée élastiquement en cas d'actionnement du levier de desserrage, en particulier donc de déviation du levier de desserrage.

8. Agencement de freinage selon au moins l'une des revendications précédentes,
**caractérisé en ce que**
la zone formant bague de serrage est encliquetée dans une rainure annulaire formée sur le corps magnétique (4), en particulier la zone formant bague de serrage présente une zone annulaire, une fente séparant la zone annulaire en deux parties, les deux parties étant maintenues précontraintes élastiquement dans la rainure annulaire, en particulier appuyant contre le fond de la rainure annulaire.

9. Agencement de freinage selon au moins l'une des revendications précédentes,
**caractérisé en ce que**
le goujon fileté (20) présente une première partie filetée et une deuxième partie filetée, une partie cylindrique étant formée axialement sur le goujon fileté (20) entre la première et la deuxième partie filetée.

10. Agencement de freinage selon au moins l'une des revendications précédentes,
**caractérisé en ce que**
les goujons filetés (20) sont disposés à une plus grande distance radiale de l'axe d'arbre que le support de garniture,
et/ou **en ce que** la plage de distance radiale couverte par les goujons filetés (20) est disposée radialement à l'extérieur de la plage de distance radiale couverte par le support de garniture et/ou au moins en chevauchement avec le support de garniture par une zone formant patte formée sur le disque de friction.

11. Moteur électrique doté d'un agencement de freinage selon au moins l'une des revendications précédentes,
**caractérisé en ce que**
le moteur électrique présente une bride de palier dans laquelle est reçu un premier palier, dans lequel le moteur électrique présente une partie formant bride dans laquelle est reçu un deuxième palier,
dans lequel l'arbre est monté au moyen du premier et du deuxième palier du moteur.

12. Moteur électrique selon la revendication précédente,
**caractérisé en ce que**
la bride de palier est reliée au corps magnétique (4) et présente un moyen de centrage correspondant au moyen de centrage du corps magnétique (4), en particulier une collerette de centrage ou un alésage de centrage,
et/ou **en ce que**
la tôle de friction est en contact avec la bride de palier, en particulier pour évacuer la chaleur de friction de l'agencement de freinage vers la bride de palier.
